# FASCICULE DE BREVET EUROPEEN

(11) **EP 2 082 190 B1**
(45) Date de publication et mention de la délivrance du brevet: **07.08.2013**
(21) Numéro de dépôt: 07858496.8
(22) Date de dépôt: 02.10.2007
(51) Int. Cl.: G01C 21/34

(54) **PROCEDE DE SELECTION D'UN TRAJET ROUTIER**
VERFAHREN ZUR AUSWAHL EINER FAHRTROUTE
ROUTE SELECTION METHOD

(30) Priorité: 24.10.2006 FR 0654469
(43) Date de publication de la demande: 29.07.2009
(73) Titulaire: Peugeot Citroën Automobiles Société Anonyme, 78140 Vélizy Villacoublay (FR)
(72) Inventeur: CONDEMINE, Eric, 91170 Viry Chatillon (FR); BASSO, Vincent, 91640 Briis Sous Forges (FR)
(74) Mandataire: Ménès, Catherine
(86) Numéro de dépôt international: PCT/FR2007/052063
(87) Numéro de publication internationale: WO 2008/050018

(56) Documents cités:
- DE-A1- 10 028 899
- FR-A1- 2 753 141
- US-A- 5 487 002

## Description

La présente invention revendique la priorité de la demande française 0654469 déposée le 24/10/2006.

La présente invention concerne la sélection d'un trajet routier pour des véhicules équipés d'un système de navigation embarqué.

Pour réduire les consommations et les émissions de polluants des véhicules automobiles, les constructeurs proposent de plus en plus de coupler le moteur thermique avec une machine électrique. Sur les véhicules dits hybrides, cette machine électrique est susceptible d'assister ou de suppléer le moteur thermique dans toutes ses phases de fonctionnement. Sur les véhicules équipés d'une fonction dite « stop and start » ou encore « stop and go », pour reprendre la terminologie anglo-saxonne, la machine électrique permet d'arrêter automatiquement le moteur dans toute phase d'utilisation du véhicule où son fonctionnement n'est pas nécessaire (arrêt à un feu d'intersection par exemple), et de le redémarrer dès que le conducteur marque sa volonté de faire repartir son véhicule en enfonçant la pédale d'accélérateur.

De tels véhicules répondent à une demande croissante pour des véhicules plus « écologiques » considérés comme plus respectueux de l'environnement. En pratique, il est toutefois clair que les bénéfices optimaux ne sont obtenus que dans certaines conditions de circulation, dictées d'une part notamment par le type de routes empruntées et le trafic et d'autre part par le comportement du conducteur, et son style plus ou moins agressif de conduite. Par ailleurs, l'agrément de conduite peut être fortement influencé par les choix effectués par le conducteur qui pourrait donc bénéficier d'informations lui permettant de respecter au mieux le profil de conduite souhaité.

Avec les systèmes de navigation équipant nombre de véhicule, le conducteur moderne a déjà pris l'habitude d'être guidé dans certains de ces choix. Ces dispositifs de navigation sont ainsi capables de calculer un itinéraire optimisé en fonction d'un certain nombre de critères tels par exemple la rapidité du trajet, en tenant compte éventuellement des conditions de circulation, ou la distance parcourue. Il est aussi connu par exemple du brevet DE19605458 de sélectionner l'itinéraire pour lequel la consommation estimée de carburant sera la plus faible. Dans le cas de véhicules disposant d'une autonomie réduite, et/ou pour lesquels les stations d'approvisionnement sont relativement éparses (comme par exemple les véhicules électriques, véhicules équipés d'une pile à combustible), une variante de ce type de dispositif est simplement un moyen pour alerter le conducteur si son autonomie est insuffisante pour parcourir le trajet souhaité (voir EP1336529 par exemple).

Le document US 5 487 002 A décrit de sélection d'un itinéraire routier pour un véhicule ou le conducteur peur sélectionner un style de conduite tel que économique ou performance, et un système de navigation embarqué à bord du véhicule détermine un itinéraire adapté au style de conduite sélectionné.

Pour autant, le guidage proposé ne permet à l'automobiliste de sélectionner un itinéraire en fonction du style de conduite qu'il souhaite pratiquer que de manière très rudimentaire, essentiellement basée sur des hypothèses empiriques conduisant par exemple à rejeter systématiquement les trajets sur voies rapides. Il existe donc un besoin d'un outil beaucoup plus fin pour permettre au conducteur d'adopter réellement une conduite reflétant l'image de marque du véhicule.

Selon l'invention, ce but est atteint en couplant le système de navigation d'un véhicule automobile avec l'ordinateur de bord, et en proposant pour un trajet donné, un itinéraire optimisé en fonction d'un style prédéfini de conduite automobile, les fonctions paramétrables du véhicule étant de plus préréglées en fonction de ce style de conduite. L'invention a ainsi pour objet un procédé de navigation pour la sélection d'un itinéraire routier pour un véhicule équipé d'un système de navigation embarqué comportant une étape de sélection d'un style de conduite par le conducteur, une étape de préréglage de fonctions paramétrables du véhicule en fonction du style de conduite choisi et une étape de sélection d'un itinéraire adapté audit style de conduite.

La liste des styles proposés en sélection est de préférence établie en fonction de l'image commerciale du véhicule, qui peut être présenté par exemple comme un véhicule sportif, urbain, écologique, technologique, économe, etc.

Dans une variante préférée de l'invention, il est également présenté au conducteur des informations spécifiques associées au style de conduite choisi par le conducteur, le sensibilisant tout particulièrement sur l'impact de ces choix de conduite par rapport à l'objectif que l'automobiliste s'est fixé. L'afficheur du système de navigation, et le système de synthèse de la voix qui y est associé, peuvent être utilisés pour présenter ces informations.

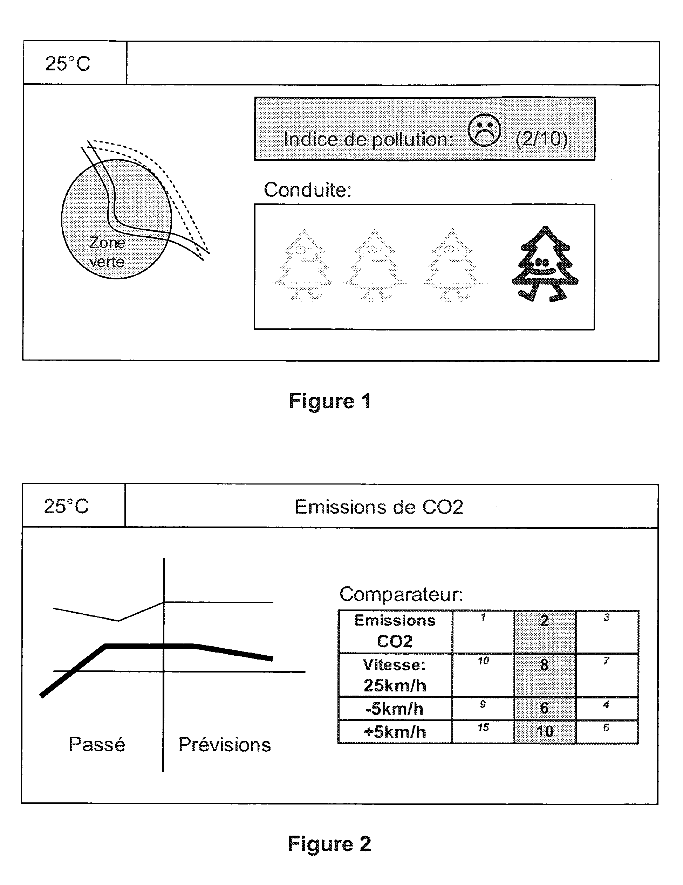

D'autres détails et caractéristiques avantageuses de l'invention ressortent de la description faite ci-après en référence aux dessins annexés dans lesquels :
● La figure 1 illustre un type d'informations complémentaires pouvant être présenté à un automobiliste ayant choisi un premier style de conduite et ;
● La figure 2 illustre une autre présentation adaptée à un autre style de conduite.

Pour fixer les idées, supposons que l'automobiliste ait le choix entre un style de conduite « sûre » ou « écologique ».

Un conducteur tenant à privilégier les éléments de sécurité pourra ainsi se voir dans un premier temps proposer d'activer tous les systèmes de sécurité disponibles, en particulier les systèmes de verrouillage des portes arrière (sécurité enfants), le système de stabilisation de trajectoire tel que le système communément connu sous le terme de système ESP, acronyme pour l'expression anglophone Electronic Stability Program), un système d'alerte de franchissement involontaire de ligne, un système d'avertissement en cas de non respect d'une distance minimum avec le véhicule précédant etc. En fonction de la température extérieure, un véhicule équipé d'une boite de vitesse automatique pourra être placé par défaut en position « 2 » ou « S » (snow), c'est-à-dire avec le seul rapport de 2^{ème}, y compris au démarrage pour faciliter la conduite sur neige ou verglas. Bien évidemment, les fonctions énumérées ci-dessus ne sont que purement illustratives, certaines fonctions comme l'allumage des feux de croisement de jour pouvant être considérées comme des options sécuritaires dans certains pays, obligatoires dans d'autres voir interdites.

Le système de navigation proposera un itinéraire privilégiant les voies exclusivement réservées aux véhicules automobiles et s'écartant éventuellement de certaines zones sensibles comme par exemple des écoles ou parcs publics. Par ailleurs, en dehors des indications sur l'itinéraire, l'afficheur du système de navigation pourra à tout instant être utilisé pour rappeler la vitesse limite dans la zone parcourue. Si le véhicule est équipé d'une machine électrique et d'un stockeur d'énergie, en fonction de l'état de charge de ce stockeur, le système de navigation proposera d'éviter (ou de privilégier) les zones pour lesquelles l'usage de la machine électrique est recommandé ou même prescrit si certaines zones, notamment des zones de centre-ville sont interdites aux véhicules polluants.

Un conducteur « écologique » pourra pour sa part se voir proposer un itinéraire optimisé en consommation et/ ou minimisant les émissions de polluants à commencer par les émissions de gaz carbonique. Si le véhicule est du type hybride, privilégiant l'usage de la machine électrique lors de la traversée de zones sensibles - tant au niveau des émissions sonores que de polluants (zones scolaires ou dans une plus large mesure zone urbaine), l'afficheur étant utilisé pour afficher par exemple une vitesse recommandée compte tenu de la qualité de l'air dans la zone traversée (information qui peut être accessible via le système de navigation). Par ailleurs, il pourra être tenu compte de la température extérieure pour recommander une gestion thermique optimale de l'habitacle, limitant les surconsommations dues à l'utilisation de moyens de climatisation, ou indiquer une consommation de polluants non plus par véhicule mais par personne présente dans le véhicule (les capteurs destinés à vérifier l'état des ceintures de sécurité permettant de déterminer le nombre de passagers), et donc d'encourager une utilisation du type covoiturage. A noter que la connaissance du nombre de passagers est également utile pour estimer la consommation sur un trajet donné (le véhicule étant plus lourd).

Bien évidemment, d'autres profils peuvent être envisagés comme un profil « touristique », avec un itinéraire reliant un maximum de sites d'intérêt historique géographique, et une vitesse recommandée préconisant un ralentissement à l'approche de certains sites - voir associée avec l'énoncé de caractéristiques ou d'anecdotes sur les sites.

Pour la mise en oeuvre de l'invention, il importe donc pour un style donné de définir d'une part un jeu de fonctions véhicules activées (ou désactivées), un ensemble de règle de sélection d'un itinéraire et un ensemble d'informations qui seront communiquées via l'afficheur du système de navigation. En d'autres termes, ceci revient à préparer un tableau dans lequel les lignes correspondent à toutes les fonctions activables du véhicule, aux critères de choix de l'itinéraire et à l'ensemble des informations à communiquer (tant du point de vue du contenu que du point de vue de la forme utilisée pour présenter ces informations), et les colonnes correspondent aux différents styles proposés, avec des marques d'association entre les lignes et les colonnes. Eventuellement, il pourra être ajouté des colonnes correspondant aux différentes législations des différents pays dans lequel le véhicule est susceptible de circuler, pour forcer la valeur de certaines options (comme par exemple l'allumage de jour des feux de croisement) en fonction du pays traversé.

La stratégie hébergée dans un calculateur véhicule récupère les informations du système de navigation, et interagit avec ce système pour sélectionner des paramètres de ce système.

A noter que l'ordinateur de bord permet de recevoir des informations telles que des paramètres génériques : l'heure, la date ; des paramètres véhicules : la gestion thermique de l'habitacle (la température intérieure de consigne), l'état de gonflage des pneumatiques, le nombre de personnes présentes dans le véhicule et le contexte extérieur : analyse de risque de verglas, la proximité des véhicules pour une manoeuvre de stationnement, ...

Le système de navigation lui fournit des informations telles que la position du véhicule sur une carte géographique (GPS), l'état du trafic dans la zone concernée et l'optimisation du parcours en fonction du trafic

Dans le cadre de l'utilisation d'un véhicule à vocation « économie d'énergie » ou « écologique » (par exemple véhicules hybrides), l'association de ces données permet de proposer au conducteur un trajet optimisé en consommation ou (et) en pollution (et ou différents autres critères) pour répondre à l'image du véhicule.

Comme indiqué précédemment, en fonction du style de conduite choisi, il sera fourni au conducteur des informations « pertinentes », récupérées via le système de navigation (en combinaison avec l'équipement audio utilisé pour récupérer les informations cachées transmises sur certaines longueurs d'onde afin de transmettre pratiquement en temps réel certaines informations comme celles liées au trafic), et/ou calculées par l'ordinateur de bord, éventuellement en tenant compte des informations récupérées par le système de navigation notamment pour estimer des données futures. Ceci permet d'adapter un véhicule pour qu'il réponde au mieux aux motivations d'achat qui ont poussé l'automobiliste à acquérir ce véhicule.

Ainsi pour un véhicule dit hybride, la clientèle peut éventuellement être classée en 3 catégories : écologique, économe et haute-technologie selon que les préoccupations sont principalement de réduire les émissions de polluants, de moins consommer de carburant ou d'être équipé d'un véhicule très perfectionné. Pour une préoccupation écologique, le client sera intéressé d'une part par la connaissance à tout instant de l'impact de son véhicule sur l'environnement, et on pourra de ce fait lui présenter des données comme la quantité de dioxyde de carbone rejetée, en utilisant de préférence une présentation très simple basée sur des pictogrammes, comme illustrée par exemple à la figure 1, encouragement à des comportements effectivement moins polluants. Dans la partie gauche de cette figure, on a également présenté en pointillé l'itinéraire le plus rapide, que l'automobiliste aurait naturellement emprunté avec un système de navigation conventionnel, et la trajectoire déviée, traversant un maximum de zones vertes, emprunté par l'automobiliste « écologique » enfin une information de type météorologique comme le niveau de pollution de l'air dans la zone traversée pourra être présentée.

A partir du choix d'une destination et en fonction de la circulation visualisée, la stratégie propose un itinéraire de « délestage » optimisé pour répondre au style de conduite revendiqué par le conducteur, par exemple pour optimiser la consommation (et diminuer les émissions de polluant), l'ordinateur de bord calculant le gain de consommation possible en fonction des informations du système de navigation : route, état du trafic, travaux, ... et des informations du véhicule : nombre de personne à bord, consommation moyenne, ...

Pour un autre style de conduite, par exemple pour un automobiliste attiré par le côté « haute technologie » d'un véhicule hybride, une présentation d'une allure plus scientifique, à base de graphes et/ou de tableaux, pourra être utilisée comme illustré figure 2. Dans l'exemple ici illustré, le tableau peut être utilisé pour comparer le trajet en cours du véhicule (colonne 2 grisée), avec un véhicule pourvu uniquement d'un moteur thermique (colonne 1) ou encore avec un comportement idéal (colonne 3) incitant ainsi l'automobiliste à modifier son style effectif de conduite, et l'informant par ailleurs des conséquences par exemple d'une modification de plus ou moins 5 km/h.

Il est clair que fondamentalement, l'adaptation de conduite qui sera nécessaire pour maintenir tous les arbres allumés ou pour rapprocher au maximum les valeurs de la colonne 2 avec celles de la colonne 3, sera essentiellement la même mais la perception du conducteur sera elle très différente.

Les avantages de cette invention sont de :
● Renforcer l'image du véhicule auprès de son utilisateur et ses occupants. Par exemple, le conducteur d'un véhicule hybride sera intéressé d'obtenir de son véhicule les informations pour optimiser le gain en consommation ou de privilégier un itinéraire plus campagnard ;
● « Personnifier » un véhicule à l'attente de son utilisateur : à chacun son itinéraire en fonction de grands thème : consommation en carburants, émissions de polluants, zones vertes, zones touristiques ;
● Possibilité de créer divers itinéraire en fonction des goûts de l'utilisateur en adéquation avec sa motivation à acheter le véhicule.

## Revendications

1. Procédé de navigation pour la sélection d'un itinéraire routier pour un véhicule équipé d'un système de navigation embarqué, comportant une étape de sélection d'un style de conduite par le conducteur, une étape de préréglage de fonctions paramétrables du véhicule en fonction du style de conduite choisi et une étape de sélection d'un itinéraire adapté audit style de conduite.

2. Procédé selon la revendication 1, **caractérisé en ce que** les styles de conduite proposés sont choisis dans une liste prédéfinie par le constructeur en fonction de l'image du véhicule, tel que sportif, urbain, écologique, technologique...

3. Procédé selon la revendication 2, **caractérisé par** l'affichage d'informations propres au style de conduite choisi.

4. Procédé selon la revendication 3, **caractérisé en ce que** la présentation des informations dépend du style de conduite choisi.

5. Procédé selon la revendication 1, **caractérisé en ce que** les fonctions paramétrables du véhicule sont associées à des éléments de sécurité et/ou de typage sportif du comportement du véhicule.

6. Procédé selon l'une des revendications précédentes, **caractérisé en ce que** l'afficheur et/ou l'interface vocale du système de navigation est/sont utilisé(s) pour communiquer des messages spécifiques propres au style de conduite choisi.

7. Procédé selon la revendication 3, **caractérisé en ce que** le véhicule étant équipé d'une machine électrique propre à suppléer le moteur thermique, les messages communiqués indiquent les économies de carburant et/ou les moindres émissions de polluants associées au choix de l'itinéraire adapté au style de conduite.

8. Procédé selon la revendication 1, **caractérisé en ce que** le véhicule étant équipé d'une machine électrique propre à suppléer le moteur thermique, un style de conduite « économique » privilégie l'usage de la machine électrique dans des zones sensibles.

## Patentansprüche

1. Navigationsverfahren zur Auswahl einer Fahrtroute für ein Fahrzeug, das mit einem mitgeführten Navigationssystem ausgerüstet ist, das einen Auswahlschritt eines Fahrstils durch den Fahrer, einen Schritt des Voreinstellens parametrierbarer Funktionen des Fahrzeugs in Abhängigkeit von dem ausgewählten Fahrstil und einen Auswahlschritt einer Route, die an den Fahrstil angepasst ist, aufweist.

2. Verfahren nach Anspruch 1, **dadurch gekennzeichnet dass** die vorgeschlagenen Fahrstile aus einer von dem Hersteller in Abhängigkeit von dem Image des Fahrzeugs, wie zum Beispiel sportlich, städtisch, ökologisch, technologisch, vordefinierten Liste ausgewählt werden.

3. Verfahren nach Anspruch 2, **gekennzeichnet durch** die Anzeige von Informationen, die dem ausgewählten Fahrstil eigen sind.

4. Verfahren nach Anspruch 3, **dadurch gekennzeichnet, dass** die Präsentation der Informationen von dem ausgewählten Fahrstil abhängt.

5. Verfahren nach Anspruch 1, **dadurch gekennzeichnet, dass** die parametrierbaren Funktionen des Fahrzeugs mit Sicherheitselementen und/oder Sporttypisierungselementen des Verhaltens des Fahrzeugs verbunden sind.

6. Verfahren nach einem der vorhergehenden Ansprüche, **dadurch gekennzeichnet, dass** die Anzeige und/oder die Sprachschnittstelle des Navigationssystems verwendet ist/werden, um spezifische Meldungen, die dem ausgewählten Fahrstil eigen sind, mitzuteilen.

7. Verfahren nach Anspruch 3, **dadurch gekennzeichnet, dass**, da das Fahrzeug mit einem Elektromotor versehen ist, der geeignet ist, um den Verbrennungsmotor zu ersetzen, die mitgeteilten Meldungen die Kraftstoffeinsparungen und/oder niedrigere Schadstoffemissionen in Zusammenhang mit der Auswahl der Route, die an den Fahrstil angepasst ist, anzeigen.

8. Verfahren nach Anspruch 1, **dadurch gekennzeichnet, dass**, da das Fahrzeug mit einem Elektromotor versehen ist, der geeignet ist, um den Verbrennungsmotor zu ersetzen, ein "wirtschaftlicher" Fahrstil den Gebrauch des Elektromotors in heiklen Bereichen vorzieht.

## Claims

1. A navigation method for the selection of a route for a vehicle equipped with an onboard navigation system, comprising a step of selection of a driving style by the driver, a step of pre-setting parameterable functions of the vehicle as a function of the selected driving style, and a step of selection of a route suited to the said driving style.

2. The method according to Claim 1, **characterized in that** the proposed driving styles are selected from a list pre-defined by the manufacturer as a function of the image of the vehicle, such as sports, urban, ecological, technological.

3. The method according to Claim 2, **characterized by** the displaying of information appropriate for the selected driving style.

4. The method according to Claim 3, **characterized in that** the presentation of the information depends on the selected driving style.

5. The method according to Claim 1, **characterized in that** the parameterable functions of the vehicle are associated with elements of safety and/or of sports class of the behaviour of the vehicle.

6. The method according to one of the preceding claims, **characterized in that** the display and/or the vocal interface of the navigation system is/are used to communicate specific messages appropriate for the selected driving style.

7. The method according to Claim 3, **characterized in that** with the vehicle being equipped with an electric machine appropriate for supplementing the heat engine, the communicated messages indicate the fuel savings and/or the lesser emissions of pollutants associated with the choice of the route suited to the driving style.

8. The method according to Claim 1, **characterized in that** with the vehicle being equipped with an electric machine appropriate for supplementing the heat engine, an "economical" driving style prefers the use of the electric machine in sensitive zones.
